# EUROPÄISCHE PATENTSCHRIFT

(11) **EP 3 224 508 B1**
(45) Veröffentlichungstag und Bekanntmachung des Hinweises auf die Patenterteilung: **18.04.2018**
(21) Anmeldenummer: 16781129.8
(22) Anmeldetag: 13.10.2016
(51) Int. Cl.: F16J 15/34, C23C 30/00

(54) **GLEITRING ODER GEGENRING FÜR EINE GLEITRINGDICHTUNG**
SLIDING RING OR COUNTER RING FOR A SLIDING RING SEAL
ANNEAU DE GLISSEMENT OU CONTRE-ANNEAU POUR UN JOINT D'ÉTANCHÉITÉ À ANNEAU DE GLISSEMENT

(30) Priorität: 14.10.2015 DE 202015007146 U
(43) Veröffentlichungstag der Anmeldung: 04.10.2017
(73) Patentinhaber: Hecker Holding GmbH & Co. KG, 71093 Weil im Schönbuch (DE)
(72) Erfinder: WEBER, Frank, 70771 Leinfelden-Echterdingen (DE); GUETLEIN, André, 72124 Pliezhausen (DE)
(74) Vertreter: DREISS Patentanwälte PartG mbB
(86) Internationale Anmeldenummer: PCT/EP2016/074576
(87) Internationale Veröffentlichungsnummer: WO 2017/064180

(56) Entgegenhaltungen:
- WO-A1-00/66300
- US-A1- 2003 207 142
- US-A1- 2010 221 448

## Beschreibung

Die vorliegende Erfindung betrifft einen Gleitring oder Gegenring für eine Gleitringdichtung sowie ein Verfahren zum Herstellen eines Gleitrings für eine Gleitringdichtung.

Der Begriff "Gleitring" ist hier im weitesten Sinne zu verstehen. Demnach kann es sich hierbei nicht nur um einen Gleitring, sondern auch um einen mit dem Gleitring zusammenwirkenden, insbesondere aufeinander gleitenden, Gegenring handeln.

Gleitringe oder Gegenringe sind aus dem Stand der Technik bekannt. Diese kommen in Gleitringdichtungen zum Einsatz, die zur Abdichtung rotierender Wellen gegenüber einer Gehäusewandung oder zur Abdichtung einer Produktseite gegenüber einer Atmosphärenseite einer Vorrichtung mit rotierender Welle dienen, beispielsweise einer Pumpe oder einem Rührwerk.

Insbesondere bei schwierigen Einsatzbedingungen an der Gleitringdichtung, beispielsweise abrasiven Medien, kommen massive Hartmetallgleitringe zum Einsatz. Neben auf Grund des hohen Hartmetallbedarfs hohen Kosten führt dies auch dazu, dass derartige Gleitringe oder Gegenringe ein vergleichsweise hohes Gewicht aufweisen. US 2010/221448A1, US 2003/207142 A1 und WO 00/66300 A1 zeigen einen Gleitring mit Merkmalen des Oberbegriffs von Anspruch 1.

Der vorliegenden Erfindung liegt die Aufgabe zugrunde, einen kostengünstigen und zuverlässig arbeitenden Gleitring oder Gegenring mit vergleichsweise geringem Gewicht bereitzustellen.

Die vorliegende Erfindung löst diese Aufgabe mit einem Gleitring oder Gegenring mit den Merkmalen des Anspruchs 1. Danach ist der Gleitring oder Gegenring ausgestattet mit einem sich in einer axialen Richtung erstreckenden metallischen Ringkörper, wobei der Ringkörper an einer axialen Endfläche eine Hartmetallschicht mit einer Gleitfläche aufweist.

Mit dem Gleitring oder Gegenring gemäß der Erfindung ist eine kostengünstige und zuverlässige Ausgestaltung ermöglicht. Dabei beruht die Konstruktion des Gleitrings oder Gegenrings auf der Erkenntnis, dass eine massive Ausgestaltung zur Erfüllung der Funktionen eines Gleitrings oder Gegenrings im Betrieb nicht erforderlich ist, sondern eine Ausgestaltung der Gleitflächen aus Hartmetall genügt. So besteht der Ringkörper, der sozusagen den "Kern" des Gleitrings oder Gegenrings bildet, aus einem metallischen, jedoch nicht hartmetallischen, Werkstoff. An einer in axialer Richtung orientierten Endfläche weist der Ringkörper eine Hartmetallschicht mit einer Gleitfläche auf. Die Gleitfläche ist dabei durch die vom Ringkörper abgewandte Oberfläche der Hartmetallschicht gebildet. Die Oberfläche dieser Schicht kann eben oder auch strukturiert sein. Die Strukturen können dabei eine beliebige Anzahl, Form und Tiefe haben. Beispielsweise können die Strukturen als Flüssigkeits- oder Gasnuten zum Hinein- und/oder Herausfördern entsprechender Medien dienen. Dadurch, dass lediglich eine Hartmetallschicht auf den Ringkörper aufgebrachtist, ist eine Einsparung von Hartmetall ermöglicht. Neben einem vergleichsweise geringen Gewicht führt dies auch zu geringeren Kosten für einen solchen Gleitring oder Gegenring.

Der Ringkörper kann eine ringförmige oder ringscheibenförmige Gestalt aufweisen. Der Ringkörper ist durch eine Oberseite, eine Unterseite, einen radial innen liegenden Ringrand und einen radial außen liegenden Ringrand begrenzt.

Der Ringkörper kann an seinem radial innen liegenden Ringrand eine Stufe, einen Absatz oder eine besondere Oberflächenstruktur, beispielsweise Nuten, aufweisen. Zudem ist denkbar, dass der Ringkörper eine vorzugsweise radial orientierte Nut zum Eingriff mit einem Befestigungselement zur Kopplung mit einer Welle oder einem Gehäuse aufweist.

In vorteilhafter Weise ist die Hartmetallschicht durch ein additives oder generatives Fertigungsverfahren ausgebildet. Hiermit kann die Hartmetallschicht - ganz gezielt - an den Stellen des Gleitrings angebracht werden, an denen das Hartmetall aus funktionalen Gründen tatsächlich erforderlich ist. Das Hartmetall kann auf diese Weise an den gewünschten Stellen und in der gewünschten Dicke aufgebracht werden.

Weiter erfindungsgemäß ist die Hartmetallschicht durch Auftragschweißen ausgebildet. Hiermit lässt sich eine hochfeste Schweißverbindung zwischen Ringkörper und Hartmetallschicht erreichen. Beim automatisierten Auftragschweißen kann das Hartmetall als Metallpulver zur Schweißstelle geführt werden. Durch einen Schweißstrahl, insbesondere einen Laser- oder Elektronenstrahl, wird die Oberfläche des Ringkörpers mit dem zugeführten Hartmetallpulver verschmolzen, beispielsweise durch selektives Laserschmelzen. Nach dem Erkalten der Hartmetallschicht ist eine mechanische Bearbeitung dieser Schicht möglich, beispielsweise durch Schleifen oder Läppen. Um ein Entzünden des Hartmetallpulvers möglichst zu verhindern, kann der Schweißstelle Schutzgas zugeführt werden.

Die Hartmetallschicht weist in axialer Richtung eine Dicke von 0,5 mm bis 2,5 mm, vorzugsweise von 1,0 mm bis 2,0 mm, auf. Auf diese Weise ist eine hinreichende Dicke der Hartmetallschicht geschaffen, so dass eine Nachbearbeitung der Hartmetallschicht und eine hinreichende Standzeit des Gleitrings ermöglicht ist.

Für eine hinreichende Materialeinsparung ist denkbar, dass in axialer Richtung das Verhältnis der Dicke der Hartmetallschicht zur Dicke des Ringkörpers zwischen 1:5 und 1:10, vorzugsweise 1:6 bis 1:8, weiter vorzugsweise 1:7, beträgt. Hiermit ist eine hinreichende Einsparung von Hartmetall und ein hinreichende Gewichtsersparnis erreicht. Im Konkreten ist denkbar, dass die Gleitfläche geschliffen ist. Somit sind hinreichende Gleiteigenschaften geschaffen. Auch ein Läppen oder Polieren der Gleitfläche ist denkbar. Auch ggf. in der Gleitfläche ausgebildete Nuten können geschliffen und/oder geläppt sein.

Im Konkreten kann der Ringkörper aus Stahl, Eisen, Aluminium oder einem anderen metallischen Material oder mit anderen Worten aus einem anderen geeigneten Metallkörper ausgebildet sein. Damit ist eine kostengünstige Ausgestaltung des Ringkörpers bei gleichzeitig hinreichender Stabilität und Duktilität (nicht spröde) realisiert.

Für eine besonders standfeste Hartmetallschicht ist denkbar, dass diese Wolframcarbid aufweist. Durch die besonders hohe Härte, die mit Wolframcarbid erreicht werden kann, ist eine besonders verschleißfeste Hartmetallschicht geschaffen.

Die eingangs genannte Aufgabe wird auch durch ein Verfahren zum Herstellen eines Gleitrings mit den Merkmalen des nebengeordneten Anspruchs gelöst, das den Aufbringvorgang der Hartmetallschicht auf den Ringkörper betrifft. Zur vorteilhaften Ausgestaltung des Verfahrens können die im Zusammenhang mit dem Gleitring beschriebenen Maßnahmen dienen, die sich auch in verfahrensmäßiger Hinsicht lesen lassen.

Die Erfindung wird im Folgenden anhand der Figuren näher erläutert. Es zeigen
- Fig.1: in einer schematischen perspektivischen Ansicht eine Ausführungsform eines Gleitrings; und

- Fig.2: in einer schematischen perspektivischen Ansicht den Aufbringvorgang der Hartmetallschicht auf den Gleitring aus Fig.1.

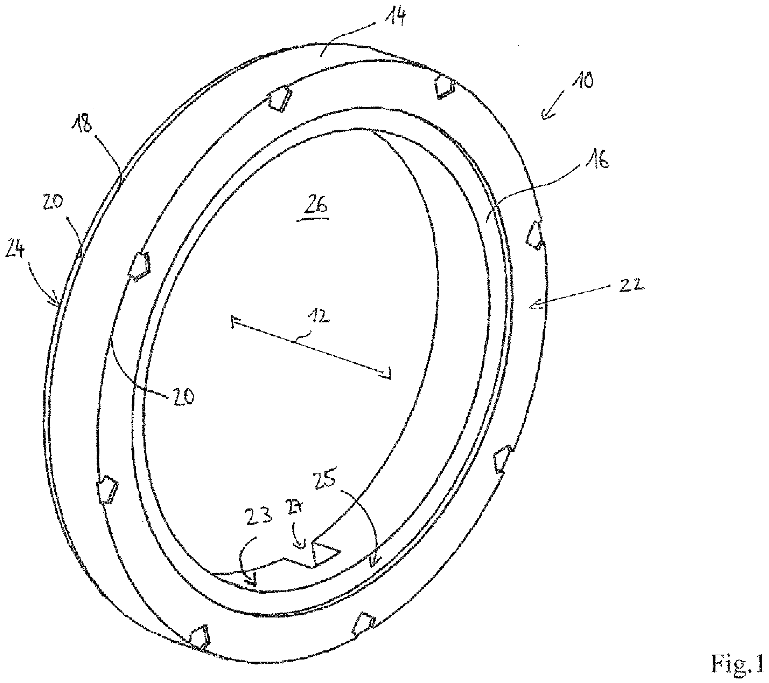

Figur 1 zeigt einen Gleitring für eine Gleitringdichtung, der insgesamt mit dem Bezugszeichen 10 bezeichnet ist.

Der Gleitring 10 weist einen sich in einer axialen Richtung 12 erstreckenden metallischen Ringkörper 14 auf. Der Ringkörper 14 weist an einer axialen Endfläche 16 oder 18, eine Hartmetallschicht 20 mit einer Gleitfläche 22 oder 24 auf.

Die axialen Endflächen 16, 18 sind zueinander parallel. Der Ringkörper 14 weist außerdem einen zentrischen Durchgang 26 auf. Am radial innen liegenden Ringrand 23 kann der Ringkörper 14 eine Stufe oder einen Absatz 25 aufweisen. Zudem weist der Ringkörper am radial innen liegenden Ringrand 23 eine oder mehrere Nuten 27 auf.

Die Hartmetallschicht 20 ist durch ein additives Fertigungsverfahren ausgebildet. Im Konkreten ist die Hartmetallschicht 20 durch Auftragschweißen ausgebildet.

Die Hartmetallschicht weist in axialer Richtung 12 eine Dicke von 1,0 mm bis 2,0 mm auf.

Die Gleitfläche 22 oder 24 ist geschliffen.

Der Ringkörper 14 ist im vorliegenden Ausführungsbeispiel aus Stahl ausgebildet.

Die Hartmetallschicht 20 weist im vorliegenden Ausführungsbeispiel Wolframcarbid als wesentlichen Bestandteil auf.

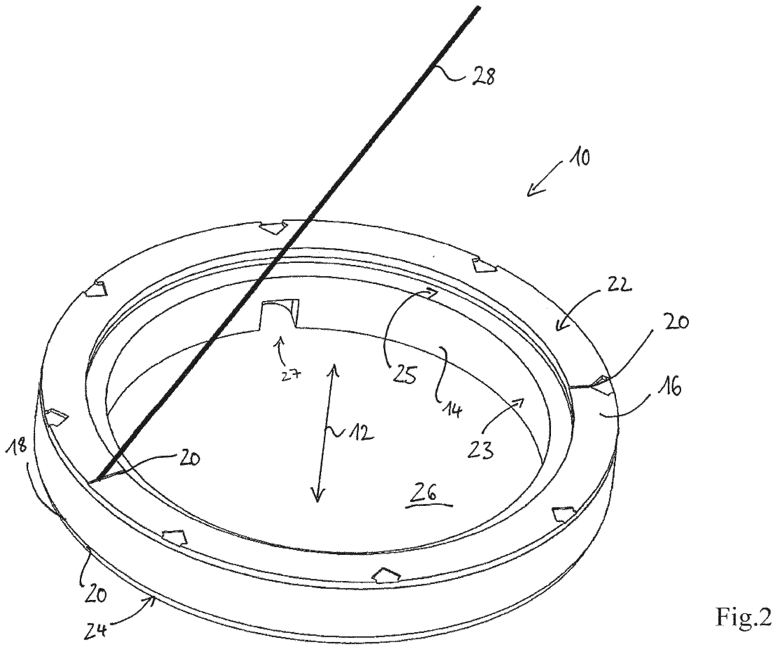

Figur 2 zeigt ein Verfahren zum Herstellen eines Gleitrings 10 für eine Gleitringdichtung, und zwar insbesondere den Aufbringvorgang der Hartmetallschicht 20 auf den Ringkörper 14. Dabei wird dem Ringkörper 14 Metallpulver in Form von Hartmetallpulver zugeführt, das mittels eines Elektronenstrahls oder Laserstrahls 28 mit dem Ringkörper 14, nämlich an einer axialen Endfläche 16 des Ringkörpers 14, verschmolzen wird. Dabei entsteht eine hochfeste Verbindung zwischen der Hartmetallschicht 20 und dem Ringkörper 14. Bei dem zugeführten Metallpulver kann es sich um pulverförmiges Wolframcarbid handeln.

## Patentansprüche

1. Gleitring (10) für eine Gleitringdichtung, mit einem sich in einer axialen Richtung (12) erstreckenden metallischen Ringkörper (14), wobei der Ringkörper (14) an mindestens einer axialen Endfläche (16, 18) eine Hartmetallschicht (20) mit einer Gleitfläche (22, 24) aufweist, **dadurch gekennzeichnet, dass** die Hartmetallschicht (20) durch Auftragsschweißen derart ausgebildet ist, dass die Oberfläche der axialen Endfläche (16, 18) des Ringkörpers (14) mit zugeführtem Hartmetallpulver verschmolzen ist und dass die Hartmetallschicht (20) in axialer Richtung (12) eine Dicke von 0,5 bis 2,5 Millimeter aufweist.

2. Gleitring (10) nach Anspruch 1, **dadurch gekennzeichnet, dass** die Hartmetallschicht (20) durch ein additives Fertigungsverfahren ausgebildet ist.

3. Gleitring (10) nach einem der vorhergehenden Ansprüche, **dadurch gekennzeichnet, dass** die Hartmetallschicht (20) in axialer Richtung (12) eine Dicke von 1,0 bis 2,0 Millimeter aufweist.

4. Gleitring (10) nach einem der vorhergehenden Ansprüche, **dadurch gekennzeichnet, dass** die Gleitfläche (22, 24) und/oder in der Gleitfläche (22, 24) ausgebildete Nuten geschliffen und/oder geläppt ist.

5. Gleitring (10) nach einem der vorhergehenden Ansprüche, **dadurch gekennzeichnet, dass** der Ringkörper (14) aus Stahl, Eisen, Aluminium oder einem anderen metallischen Material ausgebildet ist.

6. Gleitring (10) nach einem der vorhergehenden Ansprüche, **dadurch gekennzeichnet, dass** die Hartmetallschicht (20) Wolframcarbid aufweist.

7. Verfahren zum Herstellen eines Gleitrings (10) für eine Gleitringdichtung, umfassend folgende Schritte:
- Bereitstellung eines sich in einer axialen Richtung erstreckenden metallischen Ringkörpers (14),
- Zuführung von Hartmetallpulver zu einer axialen Endfläche (16, 18) des Ringkörpers (14) und
- **gekennzeichnet durch** Verschmelzen des zugeführten Hartmetallpulvers mittels eines Elektronenstrahls oder eines Laserstrahls (28), wobei die Oberfläche der axialen Endfläche (16, 18) mit dem zugeführten Hartmetallpulver verschmolzen wird und die entstehende Hartmetallschicht (20) in axialer Richtung (12) eine Dicke von 0,5 bis 2,5 Millimeter aufweist.

## Claims

1. Seal ring (10) for a mechanical face seal, having an annular metallic main body (14) extending in an axial direction (12), the annular main body (14) having on at least one axial end-face (16, 18) a layer of carbide (20) having a face for sliding contact (22, 24), **characterised in that** the layer (20) of carbide is so formed by weld hardfacing that the surface of the axial end-face (16, 18) of the annular main body (14) is fused to carbide powder which is applied, and **in that** the layer of carbide (20) is of a thickness of 0.5 to 2.5 millimetres in the axial direction (12).

2. Seal ring (10) according to claim 1, **characterised in that** the layer of carbide (20) is formed by an additive manufacturing process.

3. Seal ring (10) according to either of the preceding claims, **characterised in that** the layer of carbide (20) is of a thickness of 1.0 to 2.0 millimetres in the axial direction (12).

4. Seal ring (10) according to one of the preceding claims, **characterised in that** the face for sliding contact (22, 24) and/or grooves formed in the face for sliding contact (22, 24) are ground and/or lapped.

5. Seal ring (10) according to one of the preceding claims, **characterised in that** the annular main body (14) is formed of steel, iron, aluminium or another metallic material.

6. Seal ring (10) according to one of the preceding claims, **characterised in that** the layer of carbide (20) has tungsten carbide.

7. Method of producing a seal ring (10) for a mechanical face seal, comprising the following steps:
- provision of an annular metallic main body (14) extending in an axial direction,
- application of carbide powder to an axial end-face (16, 18) of the annular main body (14), and
- **characterised by** fusing by means of an electron beam or a laser beam (28) of the carbide powder applied, the surface of the axial end-face (16, 18) being fused to the carbide powder applied and the resulting layer of carbide (20) being of a thickness of 0.5 to 2.5 millimetres in an axial direction (12).

## Revendications

1. Anneau glissant (10) pour une garniture d'étanchéité à anneau glissant, ayant un corps d'anneau métallique (14) s'étendant dans une direction axiale (12), dans lequel le corps d'anneau (14) présente une couche de métal dur (20) avec une surface de glissement (22, 24) sur au moins une surface d'extrémité axiale (16, 18), **caractérisé en ce que** la couche de métal dur (20) est formée par soudage à superposition, **en ce que** la surface supérieure de la surface d'extrémité axiale (16, 18) du corps d'anneau (14) est fusionnée avec la poudre de métal dur alimentée, et **en ce que** la couche de métal dur (20) présente dans la direction axiale (12) une épaisseur de 0,5 à 2,5 millimètres.

2. Anneau glissant (10) selon la revendication 1, **caractérisé en ce que** la couche de métal dur (20) est formée par un procédé de fabrication supplémentaire.

3. Anneau glissant (10) selon l'une des revendications précédentes, **caractérisé en ce que** la couche de métal dur (20) présente une épaisseur de 1,0 à 2,0 millimètres dans la direction axiale (12).

4. Anneau glissant (10) selon l'une des revendications précédentes, **caractérisé en ce que** la surface de glissement (22, 24) et/ou des rainures formées dans la surface de glissement (22, 24) sont rectifiées et/ou rodées.

5. Anneau glissant (10) selon l'une des revendications précédentes, **caractérisé en ce que** le corps d'anneau (14) est réalisé en acier, en fer, en aluminium ou en un autre matériau métallique.

6. Anneau glissant (10) selon l'une des revendications précédentes, **caractérisé en ce que** la couche de métal dur (20) comprend du carbure de tungstène.

7. Procédé de fabrication d'un anneau glissant (10) pour une garniture d'étanchéité à anneau glissant, comprenant les étapes suivantes consistant à:
- fournir d'un corps d'anneau métallique (14) s'étendant dans une direction axiale,
- alimenter de la poudre de métal dur jusqu'à une surface d'extrémité axiale (16, 18) du corps d'anneau (14) et
- **caractérisé par** la fusion de la poudre de métal dur alimentée au moyen d'un faisceau d'électrons ou d'un faisceau laser (28), dans lequel la surface supérieure de la surface d'extrémité axiale (16, 18) est fusionnée avec la poudre de métal dur alimentée, et la couche de métal dur résultante (20) présente une épaisseur de 0,5 à 2,5 millimètres dans la direction axiale (12).
